# EUROPÄISCHE PATENTANMELDUNG

(11) **EP 1 624 319 A1**
(43) Veröffentlichungstag der Anmeldung: **08.02.2006**
(21) Anmeldenummer: 05105201.7
(22) Anmeldetag: 14.06.2005
(51) Int. Cl.: G01S 15/93, G01S 7/527

(54) **Verfahren und Vorrichtung zur Anpassung eines Schwellwertes einer Hindernis-Detektionseinrichtung für Kraftfahrzeuge**

(30) Priorität: 07.08.2004 DE 102004038496
(71) Anmelder: ROBERT BOSCH GMBH, 70442 Stuttgart (DE)
(72) Erfinder: Schmid, Dirk, 75397 Simmozheim (DE)

(57) **Zusammenfassung**

Die vorliegende Erfmdung betrifft eine Vorrichtung und ein Verfahren zur Abstandsmessung eines sich in der Umgebung eines Kraftfahrzeuges (1) befindlichen Hindernisses (4) mittels eines Echoverfahrens mit folgenden Verfahrensschritten: Aussenden eines Sendesignals (3) mittels mindestens einer an dem Kraftfahrzeug (1) vorgesehenen Sensoreinrichtung (2); Empfangen eines von dem Hindernis (4) reflektierten Echosignals (5) mit einer abstandsabhängigen Echoamplitude mittels der mindestens einen Sensoreinrichtung (2); Messen von bestimmte Umgebungsbedingungen des Kraftfahrzeuges charakterisierenden Daten; und Anpassen des relativen Verhältnisses zwischen der abstandsabhängigen Echoamplitude des Echosignals (5) und einem die Detektion des empfangenen Echosignals (5) bestimmenden Schwellwert der mindestens einen Sensoreinrichtung (2) an die gemessenen Umgebungsbedingungen des Kraftfahrzeuges (1).

## Beschreibung

### STAND DER TECHNIK

Die vorliegende Erfindung bezieht sich auf ein Verfahren und eine Vorrichtung zur Abstandsmessung eines sich in der Umgebung eines Kraftfahrzeuges befmdlichen Hindernisses, insbesondere mittels eines Echoverfahrens.

Obwohl auf beliebige Echoverfahren anwendbar, werden die vorliegende Erfmdung sowie die ihr zugrunde liegende Problematik in Bezug auf ein in dem Kraftfahrzeug integriertes Ultraschallsystem zur Abstandsmessung näher erläutert.

Bei derartigen Ultraschallsystemen wird ein Sendesignal von dem angestrahlten Hindernis in Form eines Echos zu dem Kraftfahrzeug zurückgeworfen und in dem Kraftfahrzeug wird in Abhängigkeit von einem Schwellwert eines Empfängers ein Warnsignal an den Kraftfahrzeugbenutzer ausgelöst. Im Zusammenhang mit derartigen Verfahren ist es bekannt, zur Vermeidung von Fehlwarnungen bestimmte Echos auszublenden, die keine Gefahr für das Fahrzeug darstellen. Dabei kann es sich beispielsweise um das Fahrbahnecho bei bestimmter Fahrbahnbeschaffenheit handeln.

Derartige Echo- bzw. Ultraschallsysteme werden beispielsweise bei Einparkhilfen verwendet. Die Einparkhilfe wird dabei in hohen Stückzahlen hergestellt und setzt sich mit wachsendem Verbreitungsgrad in nahezu allen Fahrzeugsegmenten als Sonderausstattung durch. In naher Zukunft wird es zusätzliche Fahrerassistenz-Funktionen im Kraftfahrzeug geben, welche die vorhandenen Ultraschallsensoren der Einparkhilfe benutzen oder mit weiteren Ultraschallsensoren erschlossen werden. Beispiele derartiger Fahrerassistenz-Funktionen sind Parklücken-Vermessungssysteme, semiautonome Einparkassistenten, Tote-Winkel-Detektionssysteme, etc. Diese neuen Funktionen erfordern wesentlich höhere Reichweiten der Sensorik als die Einparkhilfe. Objekte bzw. Hindernisse in Entfernungen bis zu etwa 4 m sind bei derartigen Funktionssystemen relevant.

Ein Problem aller ultraschallbasierter Systeme beruht auf der Tatsache, dass die Schallausbreitung von den Umgebungsbedingungen des Kraftfahrzeuges abhängt. Allgemein bekannt ist die Abhängigkeit der Schallgeschwindigkeit von der Lufttemperatur, welche unmittelbar in die Laufzeit des Schalls und damit in die gemessene Objektentfernung eingeht.

Bisher nur in Ansätzen berücksichtigt werden bei solchen Systemen jedoch umweltbedingte Einflüsse auf die Schalldruckamplitude, welche die Reichweite bzw. Empfindlichkeit der Sensoren beeinflussen.
Insbesondere die Temperatur und der Wasserdampfgehalt (Feuchte) der Luft, in der sich der Schall ausbreitet, haben einen großen Einfluss auf die Absorption der Schallwellen auf dem Weg vom Sensor zum reflektierenden Objekt und zurück. Ebenfalls relevant ist die Luftdichte, welche mit der geographischen Höhenlage korreliert ist. Diese Umwelt-, Wetter- und Jahreszeit-bedingten Einflussgrößen unterliegen während des Fahrbetriebs großen Schwankungen und wirken sich besonders stark bei größeren Objektentfernungen aus.

Beispielsweise beschreibt die Druckschrift DE 100 27 348 A1 ein Verfahren und eine Vorrichtung zur Kompensation der Auswirkungen der Temperatur auf die Empfindlichkeit eines elektrostatischen Ultraschall-Wandlers. Dabei wird das empfangene Signal mit einem bestimmten temperaturabhängigen Faktor multipliziert, um temperaturunabhängige Verhältnisse für die Signalauswertung zu schaffen, wobei die hierfür relevante Temperatur die eigentliche Sensortemperatur darstellt.

An diesem Ansatz gemäß dem Stand der Technik hat sich die Tatsache als nachteilig herausgestellt, dass lediglich die sensorinterne Temperaturkennlinie kompensiert wird, so dass externe atmosphärische Einflüsse nicht berücksichtigt werden. Ferner handelt es sich bei den AOS-Sensoren der Druckschrift DE 100 27 348 A1 um kapazitive Schallwandler, welche im Fahrzeuginnenraum den Abstand zwischen dem Sensor und einem Insassen bzw. dem Sitz zum Bestimmen einer Sitzbelegung detektieren. Dabei kommen die atmosphärischen dämpfenden Einflüsse auf die Amplitude aufgrund der geringen Entfernung nicht zum Tragen.

Ferner nachteilig an diesem Ansatz ist die Tatsache, dass unter Umständen nicht die eigentliche Umgebungstemperatur mitberücksichtigt wird, da beispielsweise der AOS-Sensor durch Sonneneinstrahlung erhitzt wird, während durch die Belüftung bereits kühle Luft in den Fahrzeuginnenraum geblasen wird. Dabei ergibt sich aufgrund der geringeren atmosphärischen Dämpfung der kühlen Luft eine höhere Signalamplitude, welche mit einem derartigen System nicht kompensiert wird.

Zudem ist an diesem Ansatz gemäß der Technik die Tatsache nachteilig, dass eine einfache Multiplikation mit einem bestimmten temperaturabhängigen Faktor nicht eingesetzt werden kann, wenn neben der Temperatur weitere Umgebungs- bzw. atmosphärische Einflüsse kompensiert werden sollen, welche in Abhängigkeit von der Objektentfernung ebenfalls die Schallamplitude beeinflussen.

Ferner ist im Stand der Technik die Druckschrift EP 0 935 765 B 1 bekannt, welche eine Vorrichtung und ein Verfahren zur Abstandsmessung von Hindernissen mit Hilfe eines Echoverfahrens beschreibt. Dabei wird der zeitliche Verlauf des Schwellwertes im Sensor, der die Detektion eines empfangenen Echos bestimmt, in Abhängigkeit von Daten des Kraftfahrzeuges, wie beispielsweise die räumlichen Abmessungen z.B. des Nummernschildes, die Bewegung des Kraftfahrzeuges, den Fahrzeugzustand, bestimmt.

An diesem Ansatz gemäß dem Stand der Technik hat sich jedoch die Tatsache als nachteilig herausgestellt, dass die Amplituden der Echosignale auch von Umgebungsbedingungen des Kraftfahrzeuges abhängen, welche nicht weiter berücksichtigt werden, sondern dass lediglich eine abstandsabhängige Empfindlichkeitskennlinie des Sensors eingestellt werden kann.

In Anbetracht dessen liegt der vorliegenden Erfindung die Aufgabe zugrunde, ein Verfahren und eine Vorrichtung zu schaffen, mit welchen eine reproduzierbare Detektionsleistung der Sensoren unter wechselnden Umgebungsbedingungen gewährleistet wird.

### VORTEILE DER ERFINDUNG

Diese Aufgabe wird erfindungsgemäß verfahrensseitig durch das Verfahren mit den Merkmalen des Patentanspruchs 1 und vorrichtungsseitig durch die Vorrichtung mit den Merkmalen des Patentanspruchs 10 gelöst.

Die der vorliegenden Erfindung zugrunde liegende Idee besteht darin, dass zunächst ein Sendesignal mittels mindestens einer an dem Kraftfahrzeug vorgesehenen Sensoreinrichtung ausgesendet wird, wobei ein von dem Hindernis reflektiertes Echosignal mit einer abstandsabhängigen Echoamplitude mittels dieser mindestens einen Sensoreinrichtung empfangen wird. Ferner werden bestimmte Umgebungsbedingungen des Kraftfahrzeuges charakterisierende Daten mittels geeigneter Messeinrichtungen gemessen. Anschließend erfolgt ein Anpassen des relativen Verhältnisses zwischen der abstandsabhängigen Echoamplitude des Echosignals und einem die Detektion des empfangenen Echosignals bestimmenden Schwellwert der mindestens einen Sensoreinrichtung an die gemessenen Umgebungsbedingungen des Kraftfahrzeuges.

Somit weist die vorliegende Erfindung gegenüber den bekannten Lösungsansätzen gemäß dem Stand der Technik den Vorteil auf, dass durch die Anpassung des relativen Verhältnisses zwischen der abstandsabhängigen Echoamplitude des Echosignals und dem die Detektion des empfangenen Echosignals bestimmenden Schwellwert der mindestens einen Sensoreinrichtung eine reproduzierbare Detektionsleistung der Sensoreinrichtung auch unter wechselnden Umgebungsbedingungen gewährleistet wird.

In den Unteransprüchen finden sich vorteilhafte Weiterbildungen und Verbesserungen des im Patentanspruch 1 angegebenen Verfahrens sowie der im Patentanspruch 10 angegebenen Vorrichtung.

Gemäß einer bevorzugten Weiterbildung wird an den Kraftfahrzeugbenutzer für den Fall einer Überschreitung des Schwellwertes der mindestens einen Sensoreinrichtung durch die Echoamplitude des Echosignals auf Grundlage des angepassten relativen Verhältnisses zwischen denselben ein Warnsignal ausgegeben, dass sich ein Hindernis in einer kritischen Entfernung befindet.

Gemäß einer weiteren bevorzugten Weiterbildung wird der zeitliche Verlauf des Schwellwertes der mindestens einen Sensoreinrichtung in Abhängigkeit von den Umgebungsbedingungen des Kraftfahrzeuges zum Liefern einer reproduzierbaren Detektionsleistung der mindestens einen Sensoreinrichtung eingestellt.

Alternativ oder zusätzlich kann ein variabler von den gemessenen Umgebungsbedingungen des Kraftfahrzeuges abhängender Verstärkungsfaktor zum entsprechenden Verändern der Echoamplitude des empfangenen Echosignals zum Liefern von von den Umgebungsbedingungen unabhängigen, konstanten Echoamplituden bestimmt werden.

Gemäß einem weiteren Ausführungsbeispiel wird alternativ oder zusätzlich die Sendeleistung der mindestens einen Sensoreinrichtung zum Ausgleichen von Änderungen der Echoamplitude infolge von Schwankungen der Umgebungsbedingungen an die gemessenen Umgebungsbedingungen angepasst. In allen vorgenannten Ausführungsbeispielen wird somit auf Grundlage der gemessenen Umgebungsbedingungen das relative Verhältnis zwischen der abstandsabhängigen Echoamplitude des Echosignals und dem die Detektion des empfangenen Echosignals bestimmenden Schwellwert der mindestens einen Sensoreinrichtung an die gemessenen Umgebungsbedingungen derart angepasst, dass reproduzierbare Erkennungen eines kritischen Hindernisses und Ausgabe eines Warnsignals an den Kraftfahrzeugbenutzer gewährleistet werden. Vorteilhaft können die oben genannten Möglichkeiten zum Anpassen des relativen Verhältnisses an die Umgebungsbedingungen auch beliebig miteinander kombiniert werden.

Gemäß einer weiteren bevorzugten Weiterbildung sind die die Umgebungsbedingungen des Kraftfahrzeuges charakterisierenden Daten als Temperaturdaten und/oder als Luftfeuchtigkeitsdaten und/oder als Luftdruckdaten, oder dergleichen ausgebildet. Zum Messen der einzelnen die Umgebungsbedingungen beschreibenden Daten können bereits in dem Kraftfahrzeug vorhandene Messsensoren verwendet oder neue Messsensoren in dem Kraftfahrzeug vorgesehen werden.

Gemäß einem weiteren bevorzugten Ausführungsbeispiel werden in einer Speichereinrichtung vorab Referenztabellen abgespeichert, in denen bestimmte Umgebungsbedingungen entsprechenden relativen Verhältnissen zwischen der abstandsabhängigen Echoamplitude des Echosignals und den die Detektion des empfangenen Echosignals bestimmenden Schwellwert der Sensoreinrichtung zugeordnet sind. Beispielsweise können bestimmten Umgebungsbedingungen entsprechende Verstärkungsfaktoren vorab zugeordnet und als Tabelle bzw. Kennfeld in der Speichereinrichtung bzw. einem
zentralen Steuergerät oder einem Algorithmus abgelegt werden.

Vorteilhaft wird bei der Anpassung des relativen Verhältnisses zwischen der Echoamplitude und dem Schwellwert der mindestens einen Sensoreinrichtung die Temperaturkennlinie der Empfindlichkeit der mindestens einen Sensoreinrichtung mitberücksichtigt.

### ZEICHNUNGEN

Ausführungsbeispiele der Erfindung sind in den Figuren der Zeichnung dargestellt und werden in der nachfolgenden Beschreibung näher erläutert.

In den Figuren zeigen:
Fig. 1 eine schematische Darstellung einer erfindungsgemäßen Vorrichtung gemäß einem bevorzugten Ausführungsbeispiel der vorliegenden Erfindung;
Fig. 2 eine graphische Darstellung der abstandsabhängigen Amplitude des Echosignals von der
   Umgebungstemperatur;
Fig. 3 eine graphische Darstellung der temperaturabhängigen Dämpfung des Echosignals von der relativen Luftfeuchtigkeit bei einer Schallfrequenz von 48 kHz;
Fig. 4 eine graphische Darstellung der temperaturabhängigen Dämpfung des Echosignals von der relativen Luftfeuchtigkeit bei einer Schallfrequenz von 38 kHz;
Fig. 5 eine graphische Darstellung der Abhängigkeit der relativen Echoamplitude von der
   Umgebungstemperatur;
Fig. 6 eine graphische Darstellung der abstandsabhängigen relativen Echoamplitude von der
   Umgebungstemperatur;
Fig. 7 eine graphische Darstellung der Abhängigkeit der relativen Echoamplitude von der Umgebungstemperatur nach einem Verfahren gemäß dem Stand der Technik und einem erfindungsgemäßen Verfahren gemäß einem bevorzugten Ausführungsbeispiel; und
Fig. 8 eine graphische Darstellung der Abhängigkeit des abstandsabhängigen Schwellwertes der Sensoreinrichtung von der Umgebungstemperatur.

### BESCHREIBUNG DER AUSFÜHRUNGSBEISPIELE

In den Figuren bezeichnen gleiche Bezugszeichen gleiche oder funktionsgleiche Komponenten, soweit nichts Gegenteiliges angegeben ist.

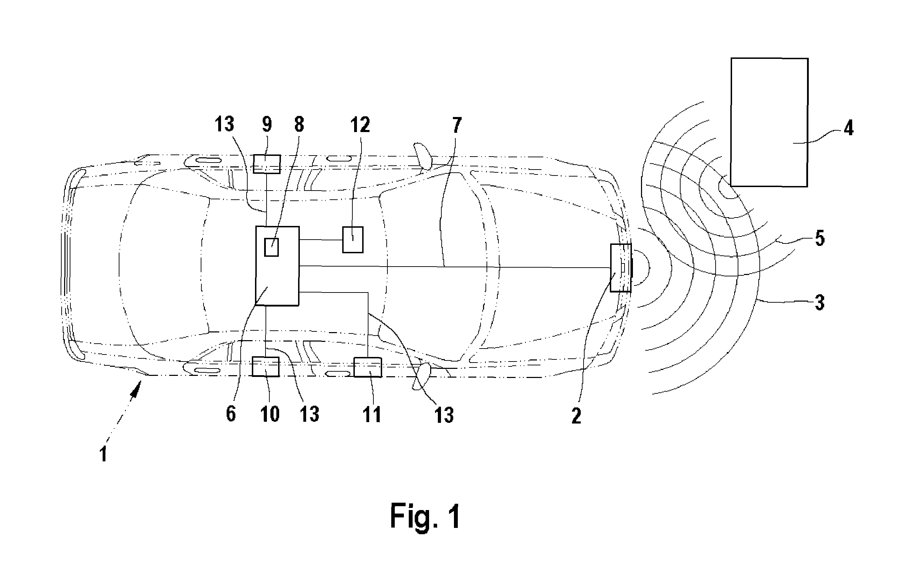

Fig. 1 illustriert eine schematische Darstellung einer Vorrichtung gemäß einem Ausführungsbeispiel der vorliegenden Erfindung. Wie in Fig. 1 dargestellt ist, ist die Vorrichtung gemäß dem vorliegenden Ausführungsbeispiel in einem Kraftfahrzeug 1 integriert und umfasst mindestens eine Sensoreinrichtung 2, welche vorzugsweise als Ultraschallsensor ausgebildet ist, zum Aussenden insbesondere von Ultraschallsignalen 3.

Die ausgesendeten Ultraschallsignale 3 werden beispielsweise an einem Hindernis 4 in Form von Echosignalen 5 reflektiert und von der Sensoreinrichtung 2 detektiert.

Die Vorrichtung gemäß dem vorliegenden Ausführungsbeispiel weist ferner eine zentrale Steuereinheit 6 auf, welche über eine Datenverbindung 7 mit dem mindestens einen Ultraschallsensor 2 verbunden ist. In der zentralen Steuereinheit 6 ist vorzugsweise eine Speichereinrichtung 8 vorgesehen, welche insbesondere einer Abspeicherung von Referenztabellen bzw. Kennfeldern dient. Selbstverständlich können mehrere Ultraschallsensoren vorgesehen und miteinander kombiniert werden.

Wie in Fig. 1 ersichtlich ist, ist die zentrale Steuereinheit 6 ferner mit mehreren Messeinrichtungen 9, 10, 11 verbunden, die jeweils einer Messung der Umgebungsbedingungen des Kraftfahrzeuges dienen. Beispielsweise ist die Messeinrichtung 9 als Temperatursensor 9 ausgestattet, wobei in modernen Kraftfahrzeugen vorzugsweise bereits ein Temperatursensor integriert ist, auf den die Vorrichtung vorteilhaft zugreifen kann. Die Messeinrichtung 10 ist beispielsweise als Luftfeuchtigkeitssensor 10 zum Liefern einer Information über die relative Feuchte der Umgebungsluft, beispielsweise als kapazitiver in dem Stoßfänger des Kraftfahrzeuges montierter Feuchtesensor ausgebildet, der von der Außenluft des Kraftfahrzeuges umströmt wird. Die Messeinrichtung 11 ist vorzugsweise als Luftdrucksensor 11 zum Messen des Umgebungsluftdruckes ausgestattet. Alternativ kann der Luftdruck beispielsweise auch aus den GPS-Koordinaten eines in dem Kraftfahrzeug integrierten Navigationssystems mittels der barometrischen Höhenformel bestimmt werden. Die Messeinrichtungen 9, 10 und 11 sind vorzugsweise über Kommunikationskanäle 13, beispielsweise über einen CAN-Bus, mit der zentralen Steuereinheit 6 verbunden. Selbstverständlich können weitere Sensoren zum Messen von weiteren Umgebungsbedingungen vorgesehen sein, die beliebig miteinander kombiniert werden können.

Anhand von Fig. 1 wird im folgenden ein Verfahren gemäß einem bevorzugten Ausführungsbeispiel der vorliegenden Erfindung näher erläutert. Zunächst werden mittels dem Temperatursensor 9, dem Luftfeuchtigkeitssensor 10 und/oder dem Luftdrucksensor 11 vorbestimmte Umgebungsbedingungen des Kraftfahrzeuges gemessen. Dabei ist für einen Fachmann offensichtlich, dass beispielsweise lediglich die Temperatur mittels des Temperatursensors 9 gemessen werden kann, wobei die zentrale Steuereinheit 6 für die Luftfeuchtigkeit eine mittlere Feuchte oder einen mittleren Schallabsorptionskoeffizienten für die weitere Berechnung verwendet. Dadurch ergeben sich zwar entfernungsabhängige Abweichungen von einem richtigen Korrekturfaktor, jedoch muss gemäß diesem Ausführungsbeispiel lediglich die Temperatur der Umgebungsluft ausgewertet werden, welche in jeglichem Kraftfahrzeug im allgemeinen zur Verfügung steht. Es ist hierbei keine zusätzliche Sensorik erforderlich.

Vorzugsweise wird jedoch neben der Temperatur zusätzlich die Luftfeuchtigkeit mittels des Luftfeuchtigkeitssensors 10 und/oder der Luftdruck mittels des Luftdrucksensors 11 gemessen. Im Falle des Weglassens des Luftdrucksensors 11 wird auch in diesem Fall durch die zentrale Steuereinheit 6 ein mittlerer Luftdruck, d.h. eine mittlere Höhenlage, vorausgesetzt. Der mögliche Amplitudenfehler des Echosignals bewegt sich in der Größenordnung von ± 10 % unabhängig von der Messentfernung und kann somit in manchen Fällen vernachlässigt werden.

Die gemessenen Daten bezüglich der Umgebungsbedingungen durch die Messeinrichtungen 9, 10 und 11 werden über vorzugsweise einen CAN-Bus 13 an die zentrale Steuereinheit 6 geleitet. Die zentrale Steuereinheit 6 wertet die empfangenen Umgebungsbedingungsdaten aus und passt das relative Verhältnis zwischen der abstandsabhängigen Echoamplitude des Echosignals 5 und des die Detektion des empfangenen Echosignals 5 bestimmenden Schwellwertes des Ultraschallsensors 2 an die gemessenen Umgebungsbedingungen des Kraftfahrzeuges 1 an.

Im folgenden werden verschiedene Verfahren für eine derartige Anpassung dieses relativen Verhältnisses exemplarisch näher erläutert.
a) Beispielsweise wird der zeitliche Verlauf des Schwellwertes des Ultraschallsensors 2 und damit die abstandsabhängige Empfmdlichkeitskennlinie desselben in Abhängigkeit von den gemessenen Umgebungsbedingungen durch die zentrale Steuereinheit 6 eingestellt. Dadurch wird eine reproduzierbare Detektionsleistung des Ultraschallsensors 2 bzw. mehrere Ultraschallsensoren auch unter wechselnden Umgebungsbedingungen gewährleistet. Ergeben beispielsweise die gemessenen Umgebungsbedingungen eine verstärkte Abschwächung der Echoamplitude, so wird das relative Verhältnis zwischen der abstandsabhängigen Echoamplitude des Echosignals 5 und dem Schwellwert des Ultraschallsensors 2 derart an die aktuellen Umgebungsbedingungen angepasst, dass der Schwellwert entsprechend verringert wird. Somit wird eine reproduzierbare Hinderniserkennung gewährleistet und es tritt keine Fehlauslösungen aufgrund der Abschwächung der Echoamplitude durch die Umgebungsbedingungen auf.
b) Alternativ oder zusätzlich zur Veränderung des Schwellwertes im Ultraschallsensor 2 kann auch ein variabler Verstärkungsfaktor des Echosignals realisiert werden, wobei der Verlauf des Schwellwertes beispielsweise unverändert bleibt. Der Verstärkungsfaktor wird in Abhängigkeit von den gemessenen Umgebungsbedingungen vorzugsweise derart eingestellt, dass sich konstante Echoamplituden, d.h. von den Umgebungsbedingungen unabhängige Echoamplituden, ergeben. Dadurch wird ebenfalls das relative Verhältnis zwischen der abstandsabhängigen Echoamplitude des Echosignals 5 und dem Schwellwert des Ultraschallsensors 2 an die gemessenen Umgebungsbedingungen angepasst, so dass ebenfalls eine reproduzierbare Erkennung von Hindernissen gewährleistet wird.
c) Zusätzlich oder wiederum alternativ kann abermals ein variabler Verstärkungsfaktor des
   Echosignals in Abhängigkeit von den gemessenen Umgebungsbedingungen durch die zentrale Steuereinheit 6 berechnet werden, welcher die Sendeleistung des Ultraschallsensors 2, d.h. beispielsweise die Dauer und/oder die Amplitude des Schallimpulses, derart steuert, dass die Änderungen der Echoamplitude infolge von Schwankungen der Umgebungsbedingungen ausgeglichen werden, d.h. dass das relative Verhältnis zwischen der abstandsabhängigen Echoamplitude des Echosignals 5 und dem Schwellwert des Ultraschallsensors 2 an die gemessenen Umgebungsbedingungen angepasst wird.

Es ist für einen Fachmann offensichtlich, dass die vorab beschriebenen Möglichkeiten eines Anpassens des relativen Verhältnisses beliebig miteinander kombiniert oder in geeigneter Weise einzeln angewendet werden können.

Vorzugsweise ermittelt ein optimiertes Kompensationsverfahren insbesondere die drei Umgebungsgrößen Temperatur, Luftfeuchtigkeit und Luftdruck mittels den Messeinrichtungen 9, 10 und 11 in regelmäßigen zeitlichen Abständen, wobei die zentrale Steuereinheit 6 einen Korrekturfaktor für jede Entfernung, in der ein Objekt gemessen wird, errechnet. Mit diesem Korrekturfaktor bzw. Verstärkungsfaktor wird entweder die Amplitude des empfangenen Echosignals korrigiert, der Schwellwert bei unveränderter Echoamplitude angepasst und/oder die Sendeleistung entsprechend den gemessenen Umgebungsbedingungen verändert. Diese Korrekturen finden vorzugsweise im Ultraschallsensor 2 statt. Die Programmierung der Verstärkungsfaktoren im Ultraschallsensor 2 wird beispielsweise durch die zentrale Steuereinheit 6 vorgenommen, welche mit dem Ultraschallsensor 2 verbunden ist.

Beispielsweise wird ein die Umgebungsbedingungen berücksichtigender Korrekturfaktor nur an einigen Stützstellen der Messentfernung berechnet, wobei für dazwischenliegende Messentfernungen ein Korrekturfaktor mittels Interpolation berechnet wird. Ferner können vorteilhaft auch mit beispielsweise Look-up-Tabellen für bestimmte Bereiche des Kennfeldes der Echoamplitude gearbeitet werden, wobei die Abhängigkeiten der Echoamplitude von der Temperatur, der Luftfeuchtigkeit, des Luftdrucks und beispielsweise der Entfernung des Hindernisses berücksichtigt werden. Dadurch kann der Rechenaufwand erheblich reduziert werden. Derartige Look-up-Tabellen können beispielsweise in der Speichereinrichtung 8 der zentralen Steuereinheit 6 vorab abgespeichert werden.

Entscheidend ist, dass eine Veränderung der Amplitude der Echosignale 5 aufgrund von wechselnden Umgebungsbedingungen derart berücksichtigt wird, dass die zentrale Steuereinheit 6 über eine Ausgabeeinrichtung 12 ein reproduzierbares Warnsignal an einen Kraftfahrzeugbenutzer ausgibt, welches eine kritische Entfernung eines Hindernisses zuverlässig und unabhängig von den gemessenen Umgebungsbedingungen indiziert.

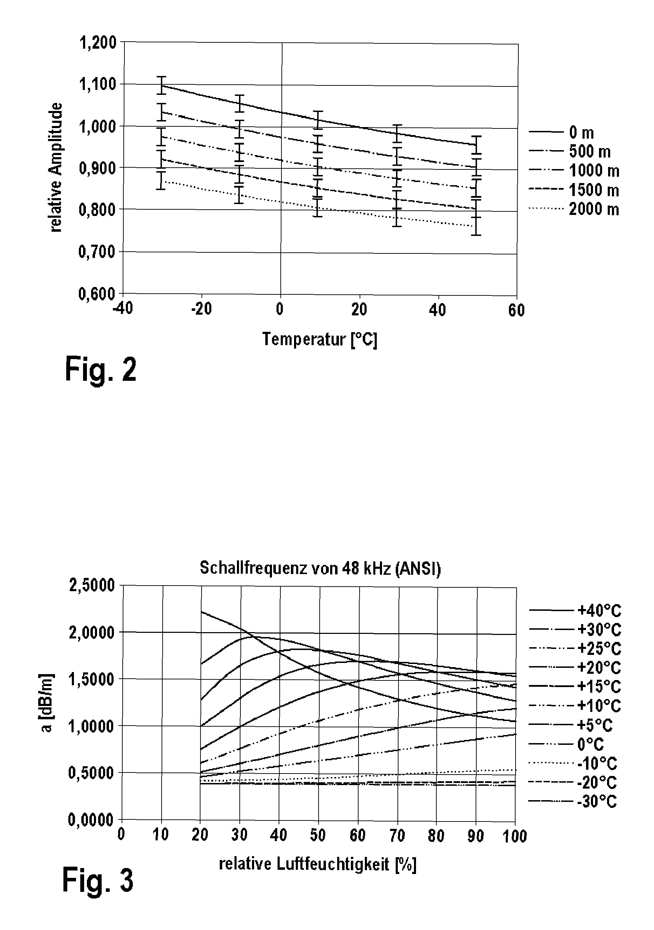

Die Amplitude der Echosignale 5 ist, wie oben bereits ausführlich erläutert, von insbesondere der Umgebungstemperatur, der Luftfeuchtigkeit, dem Luftdruck (welcher primär durch geographische Höhe und Temperatur, sekundär durch lokales Wetter bestimmt ist), dem Rückstreu-Koeffizienten des Obkjektes und der Entfernung des Objektes bzw. des Hindernisses abhängig. Die Art und Größe der einzelnen Einflüsse gehen aus den beiliegenden Fig. 2 bis 8 hervor, wobei derartige Abhängigkeiten beispielsweise in der zentralen Steuereinheit 6 abgespeichert und als Grundlage zur Berechnung eines an die Umgebungsbedingungen angepassten Korrekturfaktors dienen können.

Fig. 2 illustriert eine graphische Darstellung der Abhängigkeit der Amplitude des ausgesendeten Schallimpulses 3 von der geographischen Höhe und der Temperatur. Dabei ist ersichtlich, dass der Amplitudenwert mit zunehmender geographischer Höhe und zunehmender Umgebungstemperatur abnimmt. Die Echoamplitude 5 ist dabei proportional zum Schalldruck des ausgesendeten Schallimpulses 3. Unter der Voraussetzung einer von den Umgebungsbedingungen unabhängigen Schnelle der Sensormembran des Ultraschallsensors 2 ist der Schalldruck annähernd proportional zur Dichte der Luft und damit zum Luftdruck. Die eingezeichneten Fehlerbalken geben die Schwankungsbreite der Luftdichte aufgrund des Wettergeschehens wieder.

Fig. 3 illustriert eine graphische Darstellung des Absorptionskoeffizienten bei einer Schallfrequenz von 48 kHz in Abhängigkeit von der Umgebungstemperatur und der Luftfeuchtigkeit. Die Schallausbreitung in Luft ist durch Absorptionsprozesse auf molekularer Ebene verlustbehaftet. Wesentliche Einflussfaktoren für die Höhe der Verluste sind dabei die Lufttemperatur, der Wasserdampfgehalt, d.h. die relative Feuchte, und die Schallfrequenz. Der Absorptionskoeffizient vermindert den Schalldruck und damit die Echoamplitude in Abhängigkeit von der Entfernung zusätzlich zur geometrisch bedingten Ausbreitungsdämpfung bei einer vorausgesetzten gleichen Schallleistung auf einer gedachten Kugeloberfläche um den Ultraschallsensor 2 herum. Wie in Fig. 3 ersichtlich ist, ergeben Änderungen der Umgebungstemperatur und/oder der Luftfeuchtigkeit Veränderungen der Amplitude der Echosignale 5 bei ein und demselben Hindernis 4 in einer bestimmten Entfernung. Mit dem erfindungsgemäßen Verfahren können derartige Einflüsse ausgeglichen werden, so dass reproduzierbare Warnausgaben gewährleistet werden können.

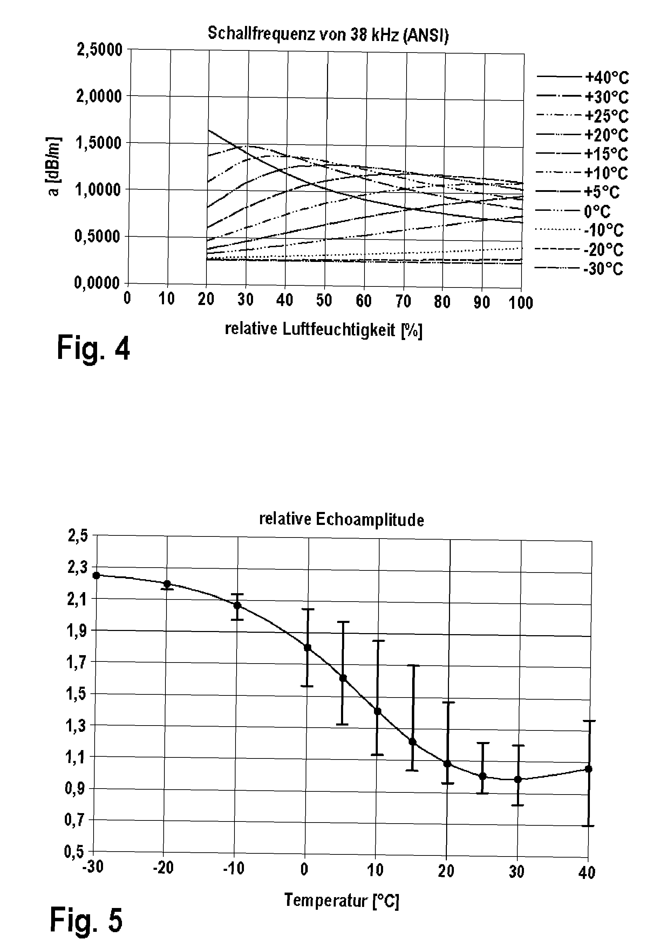

Fig. 4 zeigt eine graphische Darstellung analog zu Fig. 3, lediglich bei einer Schallfrequenz von 38 kHz, wobei ersichtlich ist, dass der Absorptionskoeffizient auch von der Schallfrequenz abhängt und diese gegebenenfalls von der zentralen Steuereinheit 6 für eine Korrektur des relativen Verhältnisses zwischen der abstandsabhängigen Echoamplitude und dem Schwellwert des Ultraschallsensors 2 mitberücksichtigt wird.

Fig. 5 illustriert eine graphische Darstellung der relativen Echoamplituden des Echosignals 5 von der Umgebungstemperatur unter Berücksichtigung der in den Fig. 2 und 3 dargestellten Zusammenhänge, wobei sich die Abweichung einer Echoamplitude eines bestimmten Objektes in bestimmter Entfernung bei verschiedenen Umgebungsbedingungen von einem Bezugswert berechnen lässt. In der in Fig. 5 illustrierten Darstellung ist der Bezugswert durch die Referenzbedingungen, d.h. bei einer Temperatur von 20°C, einer relativen Luftfeuchtigkeit von 50 % und einer geographischen Höhe von 400 m gegeben. Es wird ein Hindernis 4 in einer Entfernung von 2,5 m angenommen, wobei die Schallfrequenz des Ultraschallsignals 3 48 kHz beträgt. Die dargestellte Kurve zeigt die relative Echoamplitude, bezogen auf die Referenzbedingungen, bei abweichenden Temperaturen. Die vertikalen Balken geben die Schwankungsbreite bei gleichzeitiger Variation der relativen Feuchte zwischen 20 % und 100 % bei der jeweiligen Temperatur an. Die dargestellte Kurve bezieht sich auf den mittleren Absorptionskoeffizienten über alle Feuchtegrade zwischen 20 % und 100 % bei der jeweiligen Temperatur. Bei 20°C ist der mittlere Absorptionskoeffizient kleiner als der bei 50 % wirksame Absorptionskoeffizient, wodurch die Kurve bei 20°C eine um einen Faktor 1,1 erhöhte Amplitude anzeigt. Derartige Abhängigkeiten können ebenfalls vorab in der Speichereinrichtung 8 abgespeichert und von der zentralen Steuereinheit 6 mitberücksichtigt bzw. bei einer Berechnung eines von den Umgebungsbedingungen abhängigen Korrekturfaktors als Grundlage verwendet werden.

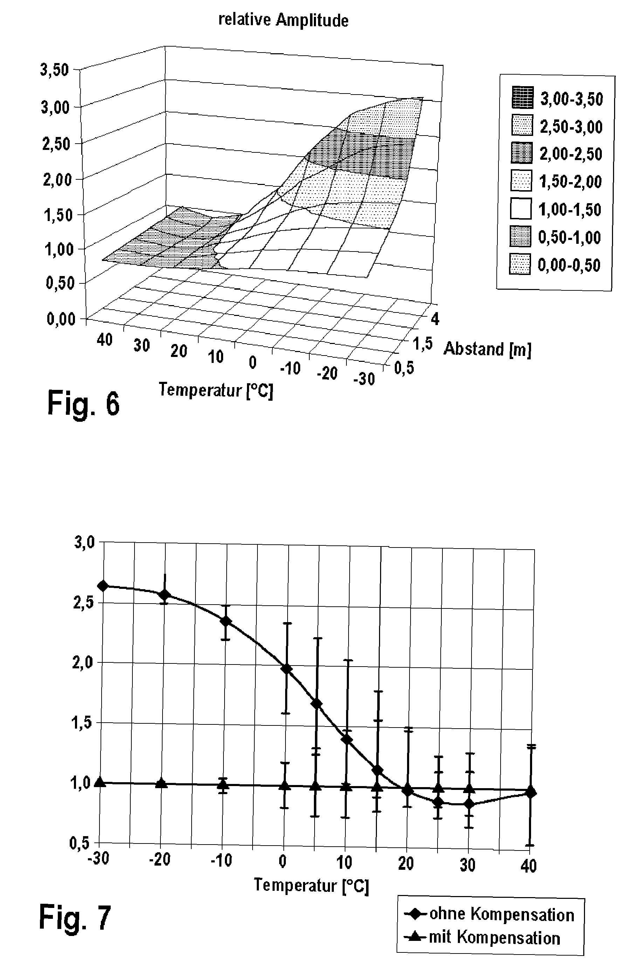

Die Darstellung in Fig. 6 entspricht der Darstellung in Fig. 5, wobei in der dritten Dimension die Abhängigkeit von der Messentfernung verdeutlicht ist. Nicht eingezeichnet ist hierbei die Schwankungsbreite durch Variation der relativen Luftfeuchtigkeit.

Fig. 7 illustriert eine graphische Darstellung, wobei die die rautenförmigen Messpunkte aufweisende Kurve der Darstellung in Fig. 5 entspricht, allerdings bei einem Hindernis 4, welches sich in 3,5 m Messentfernung befindet. Die die dreieckförmigen Messpunkte aufweisende Kurve zeigt das Ergebnis des vorliegenden erfmdungsgemäßen Verfahrens mittels eines beispielhaften Algorithmus zur Korrektur der Echoamplitude. Der Algorithmus multipliziert vorzugsweise die Amplitude des empfangenen Echos bei 3,5 m mit dem Kehrwert des durch die die rautenförmigen Messpunkte enthaltende Kurve vorgegebenen Verlaufs in Abhängigkeit von der Temperatur. Auf eine Erfassung und Berücksichtigung der Luftfeuchte wurde aus Gründen der Übersichtlichkeit verzichtet. Die größte Wirksamkeit entfaltet der Kompensationsalgorithmus insbesondere bei tiefen Temperaturen, bei denen Amplitudenüberhöhungen und somit die Gefahr unerwünschter Bodenechos auftreten.

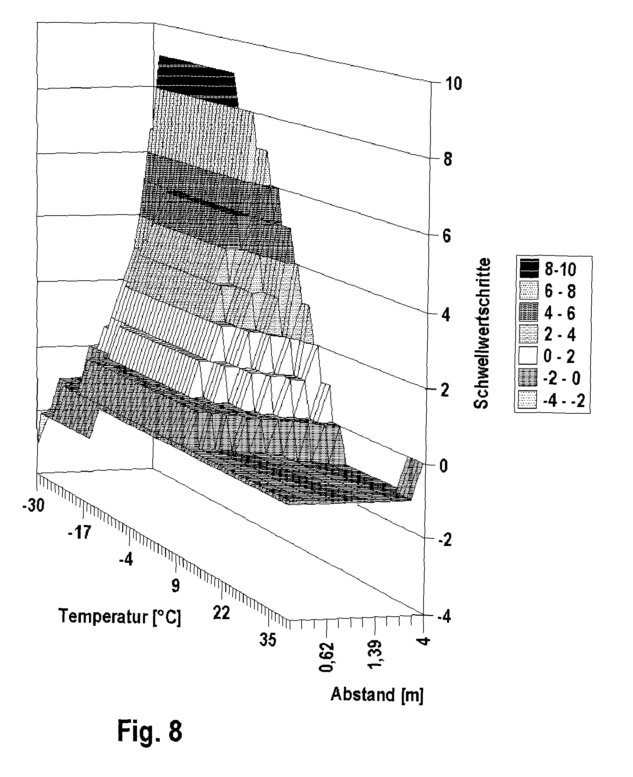

Schließlich illustriert Fig. 8 eine dreidimensionale Darstellung der Abhängigkeit der Erhöhungen des Schwellwertes des Ultraschallsensors 2 von der Temperatur und der Messentfernung des Hindernisses 4. Anstelle einer Korrektur der Echoamplitude kann es schaltungstechnisch vorteilhafter sein, eine Schaltschwelle im Sensor zu verschieben, wodurch derselbe Effekt erreicht werden kann. In Fig. 8 ist ersichtlich, um wie viele Stufen die Schwelle des Ultraschallsensors 2 bei entsprechender Temperatur und Messentfernung des Hindernisses 4 verschoben werden muss, damit im Mittel eine optimale Amplitudenkompensation erreicht wird. Eine Verschiebung der Schaltschwelle in positiver Richtung bewirkt eine Reduzierung der Sensorempfmdlichkeit. In Fig. 8 ist vorausgesetzt, dass die Verschiebung des Schwellwertes um eine Stufe einer Veränderung des Schwellwertes von 10 % relativ zum vorhergehenden Wert entspricht.

Bei der Anpassung der Schwellwerte wurde überdies noch berücksichtigt, dass die Empfindlichkeit des Sensors bei sehr tiefen Temperaturen aufgrund der temperaturabhängigen Materialeigenschaften des Schallwandlers zurückgeht. Dies hat zur Folge, dass bei sehr tiefen Temperaturen und gleichzeitig kleinen Messentfernungen die Schaltschwelle abgesenkt werden muss, um gleiche Verhältnisse wie bei Referenzbedingungen zu erreichen.

Die vorab erläuterten graphischen Darstellungen illustrieren lediglich Beispiele der Abhängigkeit der Echoamplitude von den äußeren Umgebungsbedingungen, welche bei einer Kompensation der Echoamplitude bzw. einem Anpassen des relativen Verhältnisses zwischen der Echoamplitude und dem Schwellwert des Ultraschallsensors 2 Berücksichtigung fmden können.

Beispielsweise können die in den Graphiken dargestellten Kennfelder in geeigneter Form, beispielsweise als Tabelle oder dergleichen, in der Speichereinrichtung 8 der zentralen Steuereinheit 6 abgelegt werden. Im Betrieb wird vorzugsweise die Umgebungstemperatur laufend erfasst und der Sensor bzw. die Sensoren 2 werden bei Bedarf mit neuen Schwellwerten an den implementierten Abstands-Stützstellen programmiert.

Damit schafft die vorliegende Erfmdung ein Verfahren und eine Vorrichtung zur Abstandsmessung eines sich in der Umgebung des Kraftfahrzeuges befmdlichen Hindernisses, wobei bisher noch nicht berücksichtigte umweltbedingte Einflüsse auf die Schalldruckamplitude kompensiert werden. Insbesondere die Temperatur und die Luftfeuchtigkeit, in der sich der Schall ausbreitet, welche einen großen Einfluss auf die Absorption der Schallwellen auf dem Weg von dem Ultraschallsensor zu dem Hindernis und zurück haben, können somit kompensiert werden. Dies gilt gleichsam für die Luftdichte, welche mit der geographischen Höhenlage korreliert ist. Somit können zeitlich unvorhersehbare Schwankungen der Echoamplitude ausgeglichen werden, wodurch eine zuverlässige Auslegung der Systeme für größere Messentfernungen gewährleistet wird. Dadurch kann bei der Einstellung der Detektionsempfmdlichkeit ein Kompromiss zwischen der Unterdrückung unerwünschter Bodenechos, d.h. eine möglichst niedrige Sensorempfindlichkeit, und der Erkennbarkeit kleiner oder schlecht reflektierender Hindernisse bei großer Reichweite, d.h. möglichst hohe Empfmdlichkeit, eingegangen werden.

Obwohl die vorliegende Erfindung anhand bevorzugter Ausführungsbeispiele vorstehend beschrieben wurde, ist sie darauf nicht beschränkt, sondern auf vielfältige Weise modifizierbar.

Beispielsweise kann zusätzlich die sensoreigene Temperaturkennlinie der Empfindlichkeit mitkompensiert werden, indem vorteilhaft die Sensortemperatur zusätzlich gemessen und ausgewertet wird.

Anstelle der Ausgabe eines Warnsignals an den Fahrer können auch verschiedene andere Funktion treten, z.B. die Vermessung eines Bordsteins während der längsseitigen Vorbeifahrt, wobei die ermittelten Abstände als Eingangsgröße für ein semiautonomes Einparksystem dienen.

## Patentansprüche

1. Verfahren zur Abstandsmessung eines sich in der Umgebung eines Kraftfahrzeuges (1) befmdlichen Hindernisses (4) mittels eines Echoverfahrens mit folgenden Verfahrensschritten:
Aussenden eines Sendesignals (3) mittels mindestens einer an dem Kraftfahrzeug (1) vorgesehenen Sensoreinrichtung (2);
Empfangen eines von dem Hindernis (4) reflektierten Echosignals (5) mit einer abstandsabhängigen Echoamplitude mittels der mindestens einen Sensoreinrichtung (2);
Messen von bestimmte Umgebungsbedingungen des Kraftfahrzeuges charakterisierenden Daten; und
Anpassen des relativen Verhältnisses zwischen der abstandsabhängigen Echoamplitude des Echosignals (5) und einem die Detektion des empfangenen Echosignals (5) bestimmenden Schwellwert der mindestens einen Sensoreinrichtung (2) an die gemessenen Umgebungsbedingungen des Kraftfahrzeuges (1).

2. Verfahren nach Anspruch 1, **dadurch gekennzeichnet, dass** ein Warnsignal an den Kraftfahrzeugbenutzer für den Fall einer Überschreitung des Schwellwertes der mindestens einen Sensoreinrichtung (2) durch die Echoamplitude des Echosignals (5) auf Grundlage des angepassten relativen Verhältnisses zwischen denselben ausgegeben wird.

3. Verfahren nach Anspruch 1 oder 2, **dadurch gekennzeichnet , dass** die mindestens eine Sensoreinrichtung (2) als Ultraschallsensor und die Sendesignale (3) entsprechend als Ultraschallsignale ausgebildet werden.

4. Verfahren nach wenigstens einem der vorhergehenden Ansprüche, **dadurch gekennzeichnet, dass** der zeitliche Verlauf des Schwellwertes der mindestens einen Sensoreinrichtung (2) in Abhängigkeit von den gemessenen Umgebungsbedingungen des Kraftfahrzeuges (1) zum Liefern einer reproduzierbaren Detektionsleistung der mindestens einen Sensoreinrichtung (2) eingestellt wird.

5. Verfahren nach wenigstens einem der vorhergehenden Ansprüche, **dadurch gekennzeichnet, dass** ein variabler von den Umgebungsbedingungen des Kraftfahrzeuges (1) abhängiger Verstärkungsfaktor zum entsprechenden Verändern der Echoamplitude des empfangenen Echosignals (5) zum Liefern von von den gemessenen Umgebungsbedingungen unabhängigen, konstanten Echoamplituden bestimmt wird.

6. Verfahren nach wenigstens einem der vorhergehenden Ansprüche, **dadurch gekennzeichnet, dass** die Sendeleistung der mindestens einen Sensoreinrichtung (2) zum Ausgleichen von Änderungen der Echoamplitude infolge von Schwankungen der Umgebungsbedingungen an die gemessenen Umgebungsbedingungen angepasst wird.

7. Verfahren nach wenigstens einem der vorhergehenden Ansprüche, **dadurch gekennzeichnet, dass** die die Umgebungsbedingungen des Kraftfahrzeuges (1) charakterisierenden Daten als Temperaturdaten und/oder als Luftfeuchtigkeitsdaten und/oder als Luftdruckdaten, oder dergleichen ausgebildet werden.

8. Verfahren nach wenigstens einem der vorhergehenden Ansprüche, **dadurch gekennzeichnet, dass** vorab bestimmte Kennfelder in Referenztabellen in einer Speichereinrichtung (8) abgespeichert werden, wobei beispielsweise bestimmten Umgebungsbedingungen entsprechende Korrekturfaktoren zum Anpassen des relativen Verhältnisses zwischen der Echoamplitude und dem Schwellwert der mindestens einen Sensoreinrichtung (2) zugeordnet werden.

9. Verfahren nach wenigstens einem der vorhergehenden Ansprüche, **dadurch gekennzeichnet, dass** bei der Anpassung des relativen Verhältnisses zwischen der Echoamplitude und dem Schwellwert der mindestens einen Sensoreinrichtung (2) die Temperaturkennlinie der Empfmdlichkeit der mindestens einen Sensoreinrichtung (2) mitberücksichtigt wird.

10. Vorrichtung zur Abstandsmessung eines sich in der Umgebung eines Kraftfahrzeuges (1) befindlichen Hindernisses (4) mittels eines Echoverfahrens mit:
mindestens einer Sensoreinrichtung (2) zum Aussenden eines Sendesignals und zum Empfangen eines von dem Hindernis (4) reflektierten Echosignals (5) mit einer abstandsabhängigen Echoamplitude;
mindestens einer Messeinrichtung zum Messen von bestimmte Umgebungsbedingungen des Kraftfahrzeuges (1) charakterisierenden Daten; und mit
einer zentralen Steuereinheit (6) zum Anpassen des relativen Verhältnisses zwischen der abstandsabhängigen Echoamplitude des Echosignals (5) und einem die Detektion des empfangenen Echosignals (5) bestimmenden Schwellwert der mindestens einen Sensoreinrichtung (2) an die gemessenen Umgebungsbedingungen des Kraftfahrzeuges (1).

11. Vorrichtung nach Anspruch 10, **dadurch gekennzeichnet, dass** eine Ausgabeeinrichtung (12) zum Ausgeben eines Warnsignals an den Kraftfahrzeugbenutzer für den Fall einer Überschreitung des Schwellwertes der mindestens einen Sensoreinrichtung (2) durch die Echoamplitude des Echosignals (5) auf Grundlage des angepassten relativen Verhältnisses zwischen denselben vorgesehen ist.

12. Vorrichtung nach Anspruch 10 oder 11, **dadurch gekennzeichnet, dass** die mindestens eine Sensoreinrichtung (2) als Ultraschallsensor und die Sendesignale (3) entsprechend als Ultraschallsignale ausgebildet sind.

13. Vorrichtung nach wenigstens einem der Ansprüche 10 bis 12, **dadurch gekennzeichnet, dass** die Messeinrichtung als Temperatursensor (9) zum Messen der Umgebungstemperatur und/oder als Feuchtigkeitssensor (10), beispielsweise als kapazitiver Feuchtigkeitssensor, zum Messen der Umgebungsluftfeuchtigkeit und/oder als Luftdrucksensor (11) oder Höhenmesser, beispielsweise durch Auswerten der GPS-Koordinaten des Navigationssystems, zum Messen des Umgebungsluftdruckes, ausgebildet ist.

14. Vorrichtung nach wenigstens einem der Ansprüche 10 bis 13, **dadurch gekennzeichnet, dass** eine Speichereinrichtung (8) zum Abspeichern von bestimmten Kennfeldern als Referenztabellen vorgesehen ist, wobei beispielsweise bestimmten Umgebungsbedingungen entsprechende Korrekturfaktoren zum Anpassen des relativen Verhältnisses zwischen der Echoamplitude des Echosignals (5) und dem die Detektion des empfangenen Echosignals bestimmenden Schwellwert der mindestens einen Sensoreinrichtung (2) zugeordnet sind.
